# EUROPÄISCHE PATENTSCHRIFT

(11) **EP 2 989 356 B1**
(45) Veröffentlichungstag und Bekanntmachung des Hinweises auf die Patenterteilung: **01.11.2017**
(21) Anmeldenummer: 14719703.2
(22) Anmeldetag: 17.04.2014
(51) Int. Cl.: F16J 15/08, F02F 11/00

(54) **METALLISCHE FLACHDICHTUNG SOWIE VERFAHREN ZU DEREN HERSTELLUNG**
METALLIC FLAT SEAL AND A METHOD FOR THE PRODUCTION OF SAME
JOINT D'ÉTANCHÉITÉ PLAT MÉTALLIQUE AINSI QUE PROCÉDÉ DE FABRICATION DUDIT JOINT D'ÉTANCHÉITÉ

(30) Priorität: 26.04.2013 DE 102013104269
(43) Veröffentlichungstag der Anmeldung: 02.03.2016
(73) Patentinhaber: ElringKlinger AG, 72581 Dettingen (DE)
(72) Erfinder: WERZ, Ulrich, 72581 Dettingen (DE)
(74) Vertreter: Hoeger, Stellrecht & Partner Patentanwälte mbB
(86) Internationale Anmeldenummer: PCT/EP2014/057954
(87) Internationale Veröffentlichungsnummer: WO 2014/173829

(56) Entgegenhaltungen:
- DE-A1- 19 641 491
- DE-A1-102006 021 499
- DE-A1-102013 101 253
- DE-U1- 20 221 256
- JP-A- H0 791 548

## Beschreibung

Die Erfindung betrifft eine metallische Flachdichtung mit einer mindestens eine Mediendurchgangsöffnung aufweisenden Dichtungsplatte, welche im Bereich der Mediendurchgangsöffnung mindestens eine Federstahl-Funktionslage aus einem ersten Stahlblech mit einer die Mediendurchgangsöffnung umschließenden und als Vollsicke mit einem zwischen zwei Sickenfüßen angeordneten Sickenkamm ausgebildeten Abdichtsicke sowie eine der Funktionslage unmittelbar benachbarte zweite Dichtungslage aus einem im Vergleich zu Federstahl leichter umformbaren zweiten Stahlblech aufweist, welche um die Mediendurchgangsöffnung herum eine dieser benachbarte Ringzone und Letzterer bezüglich der Mediendurchgangsöffnung radial nach außen benachbart eine originäre Dicke sowie eine originäre Härte des zweiten Stahlblechs aufweist, wobei die zweite Dichtungslage in der Ringzone mindestens einen gegenüber der originären Dicke des zweiten Stahlblechs verdickten Ringbereich aufweist, welcher sich in einer Draufsicht auf die Dichtungsplatte längs der Abdichtsicke erstreckt.

Ferner betrifft die Erfindung ein Verfahren zur Herstellung einer solchen Flachdichtung.

Bei einer solchen Flachdichtung mit einer mehrlagigen Dichtungsplatte erstreckt sich die Mediendurchgangsöffnung natürlich durch alle Dichtungslagen hindurch, welche die Dichtungsplatte im Bereich dieser Mediendurchgangsöffnung aufweist.

Unter einem Federstahl ist ein Stahl zu verstehen, bei dem das Verhältnis von Streckgrenze Rₑ oder hilfsweise Dehngrenze R_{p0,2} zu Zugfestigkeit Rₘ größer als 0,85 (85 %) ist.

Unter einer Funktionslage versteht der Dichtungsfachmann eine Dichtungslage mit mindestens einer Sicke, welche sich beim Einbau der Flachdichtung zwischen einander zugewandten Flächen von gegeneinander abzudichtenden Bauteilen, vor allem aber im Betrieb der Flachdichtung zumindest im Wesentlichen reversibel so abflachen lässt, dass die Höhe der Sicke, ausgehend von ihrem Zustand bei nicht-gepresster Flachdichtung, vermindert wird, wobei das Federstahlblech der Funktionslage zumindest im Wesentlichen nur im elastischen Bereich des Federstahls verformt wird.

Je nach Gestaltung, Dimensionierung und Anordnung des verdickten Ringbereichs einer solchen in Rede stehenden Flachdichtung sowie der Gestaltung und Dicke der zweiten Dichtungslage versteht der Dichtungsfachmann unter dieser eine die Dicke der Flachdichtung im eingebauten Zustand bestimmende bzw. vergrößernde Distanzlage und/oder eine sogenannte Stopperlage und/oder ein sogenanntes Trägerblech, wobei in diesem Zusammenhang Folgendes zu bemerken ist: Vor allem bei Flachdichtungen der in Rede stehenden Art für Verbrennungsmotoren, bei deren Mediendurchgangsöffnung es sich um eine solche für die heißen und unter Druck stehenden Verbrennungsgase handelt, ist der Dichtungskonstrukteur häufig bestrebt, die Flachdichtung, insbesondere also eine Zylinderkopfdichtung, so zu gestalten, dass die auf die eingebaute Flachdichtung einwirkenden Pressungskräfte in hohem Maße auf den an die Mediendurchgangsöffnung unmittelbar angrenzenden und diese umschließenden Dichtungsplattenbereich konzentriert werden, wozu dieser Dichtungsplattenbereich so gestaltet wird, dass in ihm bei eingebauter Flachdichtung die übereinander angeordneten Elemente der Dichtungsplatte auf Block gepresst sind und dort die Summe der Materialdicken der genannten Dichtungsplattenelemente größer ist als in einem bezüglich der Mediendurchgangsöffnung radial weiter außen liegenden Dichtungsplattenbereich - bei einer Zylinderkopfdichtung und einer als Brennraumöffnung dienenden Mediendurchgangsöffnung spricht der Dichtungsfachmann von einer Brennraumüberhöhung der Zylinderkopfdichtung um die Brennraumöffnung herum. Des Weiteren sei bemerkt, dass bei Flachdichtungen der in Rede stehenden Art der Abdichtsicke häufig ein Verformungsbegrenzer (üblicherweise Stopper genannt) zugeordnet ist, der die Aufgabe hat, im Betrieb der Flachdichtung die Abdichtsicke vor einer zu großen Abflachung, vor allem aber vor einer zu großen zeitlichen Variation (Dynamik) der Sickenhöhe zu schützen, das heißt davor, dass im Zuge der zeitlichen Variation der Sickenhöhe das Federstahlblech der Funktionslage nicht nur im elastischen Bereich des Federstahls verformt wird, sondern der Federstahl auch nennenswert plastisch verformt wird. In diesem Zusammenhang wird darauf hingewiesen, dass beim Einbau einer Flachdichtung der in Rede stehenden Art, das heißt im Zuge des Einspannens der Flachdichtung zwischen zwei gegeneinander abzudichtenden Bauteilen, wie einem Zylinderkopf und einem Motorblock, die aus einem Federstahlblech bestehende Funktionslage im Bereich einer Abdichtsicke nicht nur im elastischen Bereich des Federstahls, sondern auch in geringem Maße plastisch verformt wird, so dass nach dem Ausbau einer Flachdichtung die Abdichtsicke eine Höhe aufweist, welche geringfügig kleiner als die ursprüngliche Sickenhöhe ist. Erwähnt sei noch, dass wenn bei einer Flachdichtung der in Rede stehenden Art der Stopper an der zweiten Dichtungslage angeordnet ist, diese üblicherweise als Stopperlage bezeichnet wird.

Die US 6,499,743 B2 offenbart eine dreilagige metallische Zylinderkopfdichtung mit zwei äußeren Funktionslagen und einer dazwischen angeordneten, als Trägerlage bezeichneten inneren Dichtungslage, welche sowohl einer Brennraumüberhöhung dienen als auch eine Stopperfunktion für die beiden Funktionslagen übernehmen soll, wobei diese Zylinderkopfdichtung für einen sogenannten Buchsenmotor vorgesehen und gestaltet ist, bei dem in den Zylinderblock für jede Brennkammer eine diese umschließende Zylinderlaufbuchse eingesetzt ist. Die beiden Funktionslagen haben über jeder Zylinderlaufbuchse jeweils eine um die betreffende Brennkammer umlaufende und als Vollsicke gestaltete Abdichtsicke, wobei die beiden Abdichtsicken in axialer Richtung der Zylinderlaufbuchse übereinander liegen und in Richtung auf die Trägerlage vorspringen, das heißt bei eingebauter Zylinderkopfdichtung mit ihren Sickenkämmen gegen die Trägerlage anliegen. Abgesehen davon, dass die Trägerlage für jede Brennkammer zwei verdickte Ringbereiche mit balligem Querschnitt aufweist, hat die Trägerlage überall dieselbe Blechdicke und damit zwei zueinander parallele und ebene Hauptoberflächen. Ein bezüglich der Brennkammer radial innerer verdickter Ringbereich grenzt an die Brennkammer unmittelbar an und liegt (in Richtung der Achse der Zylinderlaufbuchse gesehen) über der Zylinderlaufbuchse und in radialem Abstand von den gleichfalls über der Zylinderlaufbuchse angeordneten Abdichtsicken radial innerhalb der Letzteren, und nach dem Grundprinzip der US 6,499,743 B2 soll der radial innere verdickte Ringbereich über der Zylinderlaufbuchse den Dichtspalt zwischen dem Zylinderkopf und dem mit der Zylinderlaufbuchse versehenen Zylinderblock abdichten, das heißt der radial innere verdickte Ringbereich bildet eine Brennraumüberhöhung. Der radial äußere verdickte Ringbereich ist radial außerhalb der Abdichtsicken und der Zylinderlaufbuchse über dem Zylinderblock angeordnet und soll nach dem Grundprinzip der US 6,499,743 B2 die auf die Abdichtsicken der eingebauten Zylinderkopfdichtung einwirkenden Pressungskräfte begrenzen. Wie die Trägerlage mit den beiden verdickten Ringbereichen versehen werden soll, lässt sich der US 6,499,743 B2 nicht entnehmen.

Eine weitere dreilagige metallische Zylinderkopfdichtung mit zwei äußeren Funktionslagen und einer zwischen diesen angeordneten, als Distanzlage bezeichneten inneren Dichtungslage ergibt sich aus der EP 1 271 016 B1, und auch bei dieser bekannten Zylinderkopfdichtung springen die jeweils eine Brennraumöffnung umschließenden Abdichtsicken der Funktionslagen in Richtung auf die innere Dichtungslage, das heißt die Distanzlage vor. In dieser Zylinderkopfdichtung soll mit möglichst geringem Aufwand für eine Abdichtsicke einer Funktionslage oder die Abdichtsicke jeder Funktionslage ein höhenprofilierter Stopper erzeugt werden, das heißt ein Stopper, welcher in Umfangsrichtung der benachbarten Brennraumöffnung ein Höhenprofil, das heißt unterschiedliche Höhen bzw. Dicken aufweist (siehe Abschnitt [0005]). Zu diesem Zweck wird auf der der jeweiligen Funktionslage zugekehrten Seite der Distanzlage ein Beilageblech in Form eines die jeweilige Brennraumöffnung umschließenden Blechrings vorgesehen, der sich in Richtung der Achse der Brennraumöffnung gesehen vom Brennraumöffnungsrand radial nach außen bis über die Abdichtsicke hinaus erstreckt und mit einem der betreffenden Abdichtsicke gegenüberliegenden ringförmigen Bereich, dessen radiale Breite etwas größer ist als die radiale Breite der Abdichtsicke, durch Prägen in die Distanzlage hineingedrückt wird, und zwar unter Bildung gleichfalls ringförmiger, einander entsprechender Vertiefungen in der Distanzlage und im Beilageblech. Auf diese Weise ergeben sich (in einer Draufsicht auf die Zylinderkopfdichtung) zu beiden Seiten der Abdichtsicke und der Vertiefungen wiederum ringförmige Bereiche des Beilageblechs, welche außerhalb der Vertiefungen auf der Distanzlage aufliegen und durch ein entsprechend gestaltetes Prägewerkzeug, und zwar zusammen mit der Distanzlage, radial innerhalb und radial außerhalb der Abdichtsicke durch den Prägevorgang jeweils mit einem Höhenprofil versehen werden, so dass diese Bereiche radial innerhalb und radial außerhalb der Abdichtsicke jeweils einen höhenprofilierten Stopper für die bei gepresster Zylinderkopfdichtung mit ihrem Sickenkamm in die Vertiefung des Beilageblechs eingreifende Abdichtsicke bilden - in diesem Fall spricht der Dichtungsfachmann von einem Doppelstopper für die Abdichtsicke. Wie sich aus Fig. 2 in Verbindung mit dem Abschnitt [0016] der EP 1 271 016 B1 ergibt, wird die Distanzlage, deren Dicke ein Vielfaches der Dicke des Beilageblechs beträgt, während des Prägevorgangs sowohl im Bereich ihrer Vertiefung als auch zwischen dieser Vertiefung und der Brennraumöffnung plastisch verformt. Wesentlich ist, dass die Distanzlage nirgends einen verdickten Ringbereich aufweist, sondern auch in ihrer mit dem Beilageblech versehenen Bereich nirgends eine Dicke aufweist, welche größer ist als die originäre Dicke der Distanzlage, nämlich deren Dicke radial außerhalb des Beilageblechs.

Aus der DE 195 48 237 A1 ergibt sich eine weitere dreilagige Zylinderkopfdichtung mit zwei Funktionslagen und einer zwischen dieser angeordneten Distanzlage, gegen welche die Abdichtsicken der beiden Funktionslagen vorspringen. Um die sogenannte Einbaudicke, das heißt die Dicke der Zylinderkopfdichtung nach deren Einbau ohne die Verwendung unterschiedlich gestalteter Funktionslagen einstellen zu können, und zwar nur durch die Verwendung unterschiedlich dicker Distanzlagen, weist die Distanzlage um eine Brennraumöffnung herum und unmittelbar an diese angrenzend einen verdickten Ringbereich auf, in welchem die Distanzlage dicker als in ihren übrigen Bereichen ausgebildet ist, und außerdem hat die Distanzlage radial außerhalb dieses verdickten Ringbereichs auf ihren beiden Seiten jeweils eine Ringnut, in welche bei gepresster Zylinderkopfdichtung die Abdichtsicke der benachbarten Funktionslage mit ihrem Sickenkamm eingreift. Wie sich aus der DE 195 48 237 A1 ergibt (sh. deren Figuren 2 bis 4 sowie Sp. 1, Zeilen 59 bis 62), wird dieser an der Distanzlage vorgesehene verdickte Ringbereich entweder dadurch erzeugt, dass die eigentliche Distanzlage durch Schmieden, das heißt im heißen Zustand des Metalls der Distanzlage umgeformt wird, oder wird die Distanzlage mit ringförmigen Auflagen versehen oder wird auf die Distanzlage eine Blechlage aufgelegt, welche um die Brennraumöffnung herum und unmittelbar an diese angrenzend auf sich selbst zurückgefaltet ist. Diese bekannte Zylinderkopfdichtung weist also nur einen einzigen, an die Brennraumöffnung angrenzenden verdickten Ringbereich auf, und in dieser Zylinderkopfdichtung dient dieser verdickte Ringbereich der Erzeugung einer Brennraumüberhöhung und soll außerdem verhindern, dass die Abdichtsicken plattgedrückt werden können.

Aufgabe der vorliegenden Erfindung ist es, eine metallische Flachdichtung der eingangs definierten Art, für deren zweite Dichtungslage ein verhältnismäßig duktiles und deshalb leicht umformbares Stahlblech verwendet wird, so zu gestalten, dass sie für die Abdichtsicke der mindestens einen Funktionslage mit ihrer zweiten Dichtungslage einen Doppelstopper bildet, welcher hinsichtlich der auf die eingebaute Flachdichtung einwirkenden Pressungskräfte sehr verformungssteif (in Richtung senkrecht zur Dichtungsplattenebene) ist und sich vorzugsweise so herstellen lässt, dass in der Flachdichtung für den Doppelstopper in bezüglich der Mediendurchgangsöffnung radialer Richtung verhältnismäßig wenig Platz benötigt wird (vor allem bei Flachdichtungen, insbesondere Zylinderkopfdichtungen, für moderne Verbrennungsmotoren steht für einen herkömmlichen Doppelstopper häufig nicht genügend Platz zwischen der Mediendurchgangsöffnung und einer oder mehreren dieser benachbarten Durchgangsöffnung bzw. -öffnungen zur Verfügung).

Ausgehend von einer metallischen Flachdichtung der eingangs definierten Art lässt sich diese Aufgabe erfindungsgemäß dadurch lösen, dass der mindestens eine verdickte Ringbereich auf der der Funktionslage zugekehrten Seite der zweiten Dichtungslage eine Ringnut bildet, in welche bei gepresster Flachdichtung die Abdichtsicke mit ihrem Sickenkamm eingreift, wobei die zweite Dichtungslage in dem durch bereichsweises Umformen des zweiten Stahlblechs erzeugten mindestens einen verdickten Ringbereich eine auf einer aufgrund des Umformens vorliegenden bereichsweisen Kaltverfestigung des zweiten Stahlblechs beruhende größere Härte als die originäre Härte des zweiten Stahlblechs aufweist, und wobei
(a) die Ringzone nur einen verdickten Ringbereich aufweist, in welchen auf mindestens einer Seite der zweiten Dichtungslage eine Ringnut eingeprägt ist, oder
(b) die Ringzone zwei in bezüglich der Mediendurchgangsöffnung radialer Richtung hintereinander und im Abstand voneinander angeordnete verdickte Ringbereiche aufweist, welche zwischen sich die Ringnut bilden.

Wie sich auch aus der folgenden Beschreibung ergibt, zeichnet sich die erfindungsgemäße Flachdichtung mit einer Ringzone gemäß dem vorgenannten Merkmal (a) und/oder mit einer Ringzone gemäß dem vorgenannten Merkmal (b) bei bevorzugten Ausführungsformen dadurch aus, dass die zweite Dichtungslage zur Erzeugung des verdickten Ringbereichs bzw. der verdickten Ringbereiche in ihrem entsprechenden Lagenbereich bzw. ihren entsprechenden Lagenbereichen kaltverformt wird und ihr dadurch (nämlich aufgrund einer Kaltverfestigung) in diesem Lagenbereich bzw. in diesen Lagenbereichen eine Härte verliehen wird, welche größer als die originäre Härte des zweiten Stahlblechs ist.

Wenn vorstehend davon die Rede ist, dass bei gepresster Flachdichtung die Abdichtsicke mit ihrem Sickenkamm in die Ringnut eingreift, kann dies auch bedeuten, dass bei gepresster Dichtung die Abdichtsicke nur über einen Teil ihrer Höhe innerhalb der Ringnut liegt. Dies könnte der Fall sein, wenn bei eingebauter Flachdichtung die Abdichtsicke im sogenannten Hauptschluss liegt und der Doppelstopper nicht in jeder Phase des Dichtungsbetriebs gepresst wird, das heißt auf einer oder beiden Seiten der Abdichtsicke nicht stets gegen die benachbarte Funktionslage anliegt. Liegt die Abdichtsicke hingegen im sogenannten Nebenschluss, wird der Doppelstopper üblicherweise in jeder Phase des Dichtungsbetriebs zu beiden Seiten der Abdichtsicke immer gegen die benachbarte Funktionslage angepresst.

Weist bei der erfindungsgemäßen Flachdichtung die zweite Dichtungslage zwei in radialem Abstand voneinander angeordnete sowie unabhängig bzw. separat voneinander erzeugte verdickte Ringbereiche auf, besitzt sie zwischen diesen Ringbereichen vorzugsweise zumindest ungefähr die originäre Dicke sowie die originäre Härte des zweiten Stahlblechs; bei einer solchen Ausführungsform wurde die zweite Dichtungslage zwischen den verdickten Ringbereichen zumindest im Wesentlichen nicht umgeformt - zwischen den verdickten Ringbereichen bedarf es keiner durch eine Kaltverfestigung bewirkten erhöhten Härte der zweiten Dichtungslage.

Bei der Herstellung mehrlagiger metallischer Zylinderkopfdichtungen mit zwei Funktionslagen und einer zwischen diesen angeordneten weiteren Dichtungslage, gegen welche eine Brennraumöffnung umschließende Abdichtsicken der beiden Funktionslagen vorspringen, ist es schon bekannt, die weitere Dichtungslage als Stopperlage zu gestalten, welche (in einer Draufsicht auf die Zylinderkopfdichtung) zwischen der Brennraumöffnung und den übereinander angeordneten Abdichtsicken der beiden Funktionslagen einen die Brennraumöffnung umschließenden und als Stopper für die Abdichtsicken wirkenden verdickten Ringbereich aufweist (sh. die DE 10 2006 021 499 A1), wobei für die weitere Dichtungslage ein im Vergleich zum Federstahl der Funktionslagen leichter umformbares Stahlblech verwendet und dieses wie folgt mit dem verdickten Ringbereich versehen wird:
Bei einer ersten Ausführungsform des sich aus der DE 10 2006 021 499 A1 ergebenden Herstellungsverfahrens wird in das Stahlblech für die weitere Dichtungslage eine zu der in Letzterer vorzusehende Brennraumöffnung konzentrische provisorische Durchgangsöffnung eingebracht, deren Durchmesser kleiner als derjenige der Brennraumöffnung ist, worauf das Stahlblech vom Rand der provisorischen Durchgangsöffnung her so gestaucht wird, dass das Stahlblech in einer an den genannten Rand angrenzenden Ringzone eine größere Dicke als die originäre Dicke dieses Stahlblechs erhält, um einen Rohling des verdickten Ringbereichs zu erzeugen, worauf dieser Rohling durch Prägen in die Gestalt des verdickten Ringbereichs gebracht wird (sh. die Figuren 4A bis 4D der DE 10 2006 021 499 A1). Der als Stopper dienende verdickte Ringbereich hat dann einen im Wesentlichen rechteckigen Querschnitt und überragt beide Hauptoberflächen der im Übrigen flachen und überall gleich dicken weiteren Dichtungslage.

Auch bei einer zweiten Ausführungsform des bekannten Herstellungsverfahrens wird in das für die weitere Dichtungslage verwendete Stahlblech eine zu der zu erzeugenden Brennraumöffnung konzentrische provisorische Durchgangsöffnung eingebracht, deren Durchmesser kleiner als derjenige der Brennraumöffnung ist, worauf eine die provisorische Durchgangsöffnung ringförmig umschließende sickenartige Auswölbung so in das Stahlblech eingeprägt wird, dass dabei der Außenrand der provisorischen Durchgangsöffnung radial nach außen gezogen wird, worauf der mit dieser Auswölbung versehene Bereich des Stahlblechs durch Prägen in die Gestalt des als Stopper dienenden verdickten Ringbereichs gebracht wird (sh. die Figuren 5A bis 5D der DE 10 2006 021 499 A1). Bei dieser Ausführungsform bildet der mit der Auswölbung versehene Bereich des Stahlblechs also eine Art Rohling des zu erzeugenden und als Stopper dienenden verdickten Ringbereichs, und nachdem dieser Rohling durch Prägen, nämlich durch Komprimieren senkrecht zur Ebene der weiteren Dichtungslage umgeformt und in die Gestalt des als Stopper dienenden verdickten Ringbereichs gebracht wurde, besitzt Letzterer auf seiner der konkaven Seite der den Rohling bildenden Auswölbung entsprechenden Seite eine funktionslose, nur noch ganz geringfügige, die Brennraumöffnung umgebende ringförmige Vertiefung und damit einen im Wesentlichen rechteckigen Querschnitt, dessen Dicke größer ist als diejenige der im Übrigen flachen und überall gleich dicken weiteren Dichtungslage, das heißt die originäre Dicke des für die weitere Dichtungslage verwendeten Stahlblechs.

Bei den sich aus der DE 10 2006 021 499 A1 ergebenden Zylinderkopfdichtungen weist die zwischen den beiden Funktionslagen angeordnete weitere Dichtungslage im Bereich der Brennraumöffnung also nur einen einzigen, als Stopper dienenden verdickten Ringbereich auf, welcher bezüglich der Brennraumöffnung radial innerhalb der Abdichtsicken der beiden Funktionslagen liegt, für welche der verdickte Ringbereich eine Stopperfunktion ausübt.

Vor allem dann, wenn bei der erfindungsgemäßen Flachdichtung die Abdichtsicke im Nebenschluss liegt, wird die zweite Dichtungslage bevorzugt so gestaltet, dass die Breite der Ringnut größer als die Breite der Abdichtsicke ist, damit Letztere beim Einbau der Dichtung und/oder im Dichtungsbetrieb durch die Ränder der Ringnut nicht beschädigt werden kann. Diesbezüglich ist es auch von Vorteil, wenn die Seitenwände der Ringnut an ihren oberen, freien Rändern (in einem Querschnitt durch die zweite Dichtungslage) gerundet, das heißt mit einem Radius versehen sind. Wie sich aus dem Folgenden noch ergeben wird, kann die Breite der Ringnut jedoch auch gleich groß oder kleiner sein als die Breite der Abdichtsicke. Außerdem gilt Vorstehendes auch für den Fall einer im sogenannten Hauptschluss liegenden Abdichtsicke, für den es sich empfehlen kann, die Breite der Ringnut kleiner zu wählen als die Breite der Abdichtsicke.

Unabhängig davon, ob bei der erfindungsgemäßen Flachdichtung die Abdichtsicke im Neben- oder Hauptschluss liegt, ist es empfehlenswert, die Flachdichtung so zu gestalten, dass die Tiefe der Ringnut derart bemessen ist, dass bei gepresster Flachdichtung und zu beiden Seiten der Ringnut gegen den mindestens einen verdickten Ringbereich anliegender Funktionslage im Dichtungsbetrieb die Abdichtsicke zumindest im Wesentlichen nur reversibel, das heißt elastisch verformt wird. Bei bevorzugten Ausführungsformen der erfindungsgemäßen Flachdichtung dient der bezüglich der Mediendurchgangsöffnung radial innere Teil des mindestens einen verdickten Ringbereichs zwar im Wesentlichen der Bildung einer Überhöhung der Flachdichtung in ihrem an die Mediendurchgangsöffnung unmittelbar anschließenden Bereich, das heißt im Falle einer Zylinderkopfdichtung also einer Brennraumüberhöhung, dennoch kann die Flachdichtung aber so gestaltet werden, dass der mindestens eine verdickte Ringbereich zu beiden Seiten der Abdichtsicke für diese einen solchen Verformungsbegrenzer bildet, dass die Abdichtsicke im Dichtungsbetrieb nicht durch übermäßige Abflachungen geschädigt wird.

Die Erfindung betrifft auch ein Verfahren zur Herstellung einer metallischen Flachdichtung mit einer mindestens eine Mediendurchgangsöffnung aufweisenden Dichtungsplatte, welche im Bereich der Mediendurchgangsöffnung mindestens eine Federstahl-Funktionslage aus einem ersten Stahlblech mit einer die Mediendurchgangsöffnung umschließenden und als Vollsicke ausgebildeten Abdichtsicke sowie eine der Funktionslage unmittelbar benachbarte zweite Dichtungslage aus einem im Vergleich zu Federstahl leichter umformbaren zweiten Stahlblech aufweist, welche um die Durchgangsöffnung herum eine dieser benachbarte Ringzone und Letzterer bezüglich der Mediendurchgangsöffnung radial nach außen benachbart eine originäre Dicke des zweiten Stahlblechs aufweist, wobei die zweite Dichtungslage in ihrer Ringzone mindestens einen gegenüber der originären Dicke des zweiten Stahlblechs verdickten Ringbereich aufweist, welcher sich in einer Draufsicht auf die Dichtungsplatte längs der Abdichtsicke erstreckt und auf der der Funktionslage zugekehrten Seite der zweiten Dichtungslage eine Ringnut bildet, in welche bei gepresster Flachdichtung die Abdichtsicke mit ihrem Sickenkamm eingreift; erfindungsgemäß wird zur Erzeugung des verdickten Ringbereichs in das für die zweite Dichtungslage verwendete zweite Stahlblech eine zu der in Letzterem zu erzeugenden Mediendurchgangsöffnung konzentrische provisorische Durchgangsöffnung eingebracht, deren Durchmesser kleiner als derjenige der Mediendurchgangsöffnung ist, worauf das zweite Stahlblech vom Rand der provisorischen Durchgangsöffnung her so gestaucht und dabei seine Materialdicke so vergrößert wird, dass sich ein Rohling des verdickten Ringbereichs ergibt, worauf dieser Rohling durch Prägen in die Gestalt des verdickten Ringbereichs gebracht wird.

Alternativ kann zur Erzeugung eines verdickten Ringbereichs in das für die zweite Dichtungslage verwendete zweite Stahlblech eine zu der in Letzterem zu erzeugenden Mediendurchgangsöffnung konzentrische provisorische Durchgangsöffnung eingebracht werden, deren Durchmesser kleiner als derjenige der Mediendurchgangsöffnung ist, worauf eine die provisorische Durchgangsöffnung ringförmig umschließende Auswölbung so in das zweite Stahlblech eingeprägt wird, dass dabei der Außenrand der provisorischen Durchgangsöffnung radial nach außen gezogen wird, worauf der mit der Auswölbung versehene Bereich des zweiten Stahlblechs durch Prägen in die Gestalt des verdickten Ringbereichs gebracht wird.

Weist die zweite Dichtungslage nur einen verdickten Ringbereich auf, wird bei bevorzugten Ausführungsformen des erfindungsgemäßen Verfahrens die Ringnut in diesen verdickten Ringbereich eingeprägt.

Werden mit der einen und/oder mit der anderen Ausführungsform des erfindungsgemäßen Verfahrens im zweiten Stahlblech vorzugsweise nacheinander zwei verdickte Ringbereiche in bezüglich der Mediendurchgangsöffnung radialem Abstand voneinander erzeugt, bilden diese zwischen sich die Ringnut; in diesem Fall empfiehlt sich eine solche Gestaltung des Herstellverfahrens, dass der bezüglich der Mediendurchgangsöffnung radial innere verdickte Ringbereich durch Stauchen des zweiten Stahlblechs und der radial äußere verdickte Ringbereich durch Prägen einer Auswölbung erzeugt wird (jeweils mit einem nachfolgenden Prägen des umgeformten Bereichs des zweiten Stahlblechs, um diesem Bereich die Gestalt des verdickten Ringbereichs zu verleihen). Es kann aber auch vorteilhaft sein, jeden der verdickten Ringbereiche jeweils durch Prägen einer Auswölbung und nachfolgendes Prägen des umgeformten Bereichs des zweiten Stahlblechs zu erzeugen.

Weitere Merkmale, Einzelheiten und Vorteile der erfindungsgemäßen Flachdichtung und des erfindungsgemäßen Herstellverfahrens ergeben sich aus der beigefügten zeichnerischen Darstellung einiger Ausführungsformen der Erfindung sowie der nachfolgenden Beschreibung dieser Ausführungsformen; in den Zeichnungen zeigen:
- Fig. 1:: eine Draufsicht auf einen Teil einer als Zylinderkopfdichtung gestalteten erfindungsgemäßen Flachdichtung;
- Fig. 2A:: eine stark vereinfachte und schematisierte Schnittdarstellung einer ersten Ausführungsform der Erfindung, und zwar einen Schnitt nach der Linie 2-2 in Fig. 1;
- Fig. 2B bis 2D:: der Fig. 2A entsprechende Schnittdarstellungen einer zweiten, dritten und vierten Ausführungsform der Erfindung;
- Fig. 3A bis 3D:: eine Darstellung mehrerer Schritte eines erfindungsgemäßen Verfahrens zur Herstellung der in den Figuren 2B bis 2D gezeigten Innenlagen einer erfindungsgemäßen Zylinderkopfdichtung, deren Innenlage für eine Brennraumöffnung nur einen einzigen verdickten Ringbereich aufweist, in welchen auf beiden Seiten jeweils eine Ringnut für die Abdichtsicke der jeweils benachbarten Funktionslage eingeprägt ist, und
- Fig. 4A bis 4D:: den Fig. 3A bis 3D entsprechende Darstellungen mehrerer Schritte eines erfindungsgemäßen Verfahrens zur Herstellung des gemäß Fig. 2A rechten verdickten Ringbereichs der Innenlage der in Fig. 2A gezeigten Zylinderkopfdichtung.

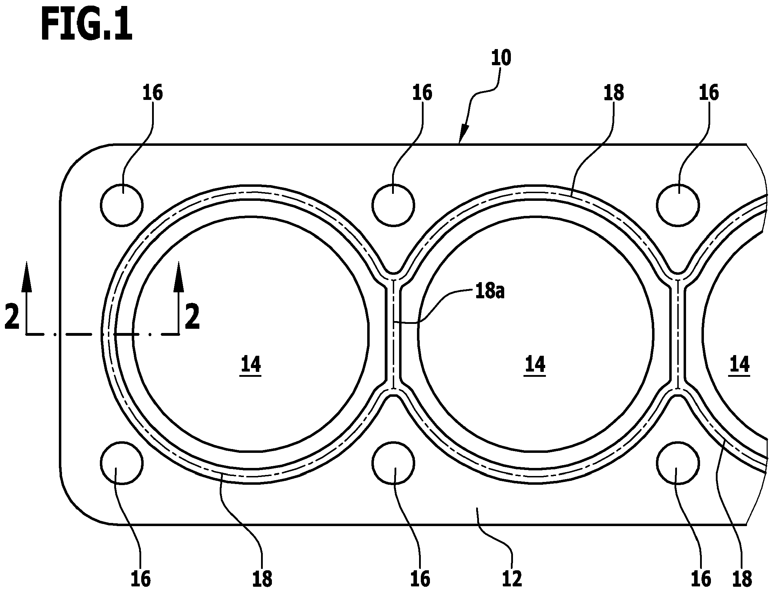

Eine in Fig. 1 in einer Draufsicht, jedoch nur teilweise dargestellte mehrlagige erfindungsgemäße Zylinderkopfdichtung hat eine Dichtungsplatte 10 mit einer oberen, in Fig. 1 sichtbaren Funktionslage 12, mehreren Brennraumöffnungen 14 und mehreren Schraubenlöchern 16 für den Durchtritt von Zylinderkopfschrauben.

In die obere Funktionslage 12 sind ebenso wie in eine in Fig. 1 nicht erkennbare untere Funktionslage Abdichtsicken 18 eingeprägt, von denen jede jeweils eine Brennraumöffnung 14 umschließt und vom Rand der zugehörigen Brennraumöffnung einen radialen Abstand aufweist. Die Abdichtsicken 18 sind als sogenannte Vollsicken mit einem insbesondere ungefähr kreisbogenförmigen Querschnitt gestaltet, wobei die Fig. 1 eine Draufsicht auf die konkave Seite einer jeden Abdichtsicke darstellen soll.

In den schmalen Stegbereichen der Dichtungsplatte 10 zwischen einander benachbarten Brennraumöffnungen 14 können die Abdichtsicken 18 ineinander übergehen, so wie dies in Fig. 1 dargestellt ist, so dass in jedem dieser Stegbereiche zwei einander benachbarte Abdichtsicken 18 nur einen einzigen Sickenabschnitt 18a bilden - grundsätzlich ist es aber auch möglich, dass in jedem dieser Stegbereiche zwei einander benachbarte Abdichtsicken 18 voneinander getrennt sind, so dass jede dieser Abdichtsicken einen in sich geschlossenen Kreisring bildet, was voraussetzt, dass der Stegbereich eine hierfür ausreichende Breite aufweist.

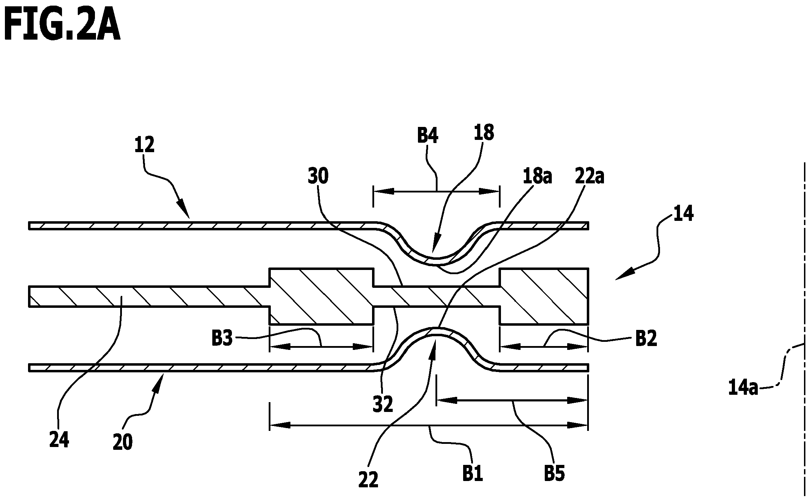

Der in Fig. 2A gezeigte Schnitt nach der Linie 2-2 in Fig. 1 durch eine erste Ausführungsform der erfindungsgemäßen Zylinderkopfdichtung zeigt außer der oberen Funktionslage 12 mit deren Abdichtsicke 18 eine untere Funktionslage 20 mit einer Abdichtsicke 22 sowie eine zwischen diesen beiden Funktionslagen angeordnete Innenlage 24, bei welcher es sich um die zweite Dichtungslage im Sinne der beigefügten Ansprüche handelt. Für die Innenlage 24 wurde ein Stahlblech aus einem verhältnismäßig leicht umformbaren, das heißt verhältnismäßig duktilen Stahl verwendet, und die Innenlage 24 weist um die Brennraumöffnung 14 herum eine Ringzone mit einer radialen Breite B1 auf, wobei diese Ringzone an den Außenrand der Brennraumöffnung 14 unmittelbar angrenzt. Im Folgenden wird auch diese Ringzone selbst mit B1 bezeichnet werden.

Erfindungsgemäß wurde das für die Innenlage 24 verwendete Stahlblech so umgeformt, dass es um die Brennraumöffnung 14 herum zwei verdickte Ringbereiche B2 und B3 aufweist, welche in einem bezüglich einer Achse 14a der Brennraumöffnung 14 radialen Abstand B4 voneinander angeordnet sind und deren jeweilige radiale Breite im Folgenden gleichfalls mit B2 bzw. B3 bezeichnet werden wird. Der radial äußere verdickte Ringbereich B3 endet am radial äußeren Rand der Ringzone B1, und der radial innere verdickte Ringbereich B2 endet am radial inneren Rand der Ringzone B1.

Zwischen den verdickten Ringbereichen B2 und B3 bildet die Innenlage 24 also auf jeder ihrer beiden Seiten eine um die Brennraumöffnung 14 herum verlaufende Ringnut 30 bzw. 32.

Der Ringzone B1 radial nach außen benachbart sowie in dem die Breite B4 aufweisenden Bereich zwischen den beiden verdickten Ringbereichen B2 und B3 weist die Innenlage 24 eine Dicke und eine Härte auf, welche zumindest im Wesentlichen der originären Dicke bzw. der originären Härte des für die Herstellung der Innenlage 24 verwendeten Stahlblechs entspricht; hingegen weisen die verdickten Ringbereiche B2 und B3 eine größere Dicke als die originäre Dicke dieses Stahlblechs, aber auch eine größere Härte als die originäre Härte dieses Stahlblechs auf, wobei diese größere Härte darauf zurückzuführen ist, dass die verdickten Ringbereiche B2 und B3 jeweils durch eine Kaltumformung des für die Innenlage 24 verwendeten Stahlblechs erzeugt wurden und mit diesem Umformen eine Kaltverfestigung des Stahls einherging, aufgrund welcher die verdickten Ringbereiche B2 und B3 eine größere Härte als die originäre Härte des für die Herstellung der Innenlage 24 verwendeten Stahlblechs aufweisen.

Bei der in Fig. 2A dargestellten erfindungsgemäßen Zylinderkopfdichtung liegen die gegen die Innenlage 24 vorspringenden Abdichtsicken 18 und 22 einander und dem die Breite B4 aufweisenden Bereich der Innenlage 24 zwischen den verdickten Ringbereichen B2 und B3 gegenüber, und die bezüglich der Achse 14a radiale Breite der Abdichtsicken 18 und 22 ist höchstens gleich groß und vorzugsweise etwas kleiner als die Breite B4. Des Weiteren beträgt bei bevorzugten Ausführungsformen die radiale Breite der Ringzone B1 maximal ungefähr das Zweifache des radialen Abstands der mit 18a und 22a bezeichneten Sickenkämme der Abdichtsicken 18 und 22 vom Außenrand der Brennraumöffnung 14 (immer auf die Achse 14a bezogen).

Entsprechend der noch folgenden Beschreibung kann die radiale Breite der Abdichtsicken 18 und 20 aber auch etwas größer sein als die Breite B4. Außerdem wird empfohlen, am radial inneren und radial äußeren Rand einer jeden Ringnut 30 die verdickten Ringbereiche B2 und B3 an den Übergängen in ihre der Funktionslage 12 bzw. der Funktionslage 20 zugewandten Flächen so abzurunden, dass sie dort im Gegensatz zu der Darstellung in Fig. 2A keine Kanten aufweisen (Gleiches kann gegebenenfalls für das radial innere Ende des verdickten Ringbereichs B2 und/oder für das radial äußere Ende des verdickten Ringbereichs B3 gelten). Noch vorteilhafter ist es, die Innenlage 24 im Bereich der Ringnut 30 und/oder der Ringnut 32 so zu gestalten, dass der Querschnitt der betreffenden Ringnut am Übergang der Nutseitenwände in den Nutboden jeweils eine Rundung bzw. einen Radius aufweist (statt der dort in Fig. 2A gezeigten winkelförmigen Querschnittsform).

Die Fig. 2A zeigt die erfindungsgemäße Zylinderkopfdichtung im nichtgepressten Zustand, wobei die in Richtung der Achse 14a gemessenen Abstände der Funktionslagen 12 und 20 von der Innenlage 24 übertrieben groß dargestellt wurden. Erfindungsgemäß sind die in Richtung der Achse 14a zu messenden Höhen der noch nicht gepressten Abdichtsicken 18 und 22 größer als die in diese Richtung gemessenen Tiefen der Ringnuten 30 und 32, wobei diese Höhen und Tiefen erfindungsgemäß so bemessen und aufeinander abgestimmt sein sollen, dass bei gepresster Zylinderkopfdichtung und zu beiden Seiten der Ringnuten 30 und 32 gegen die verdickten Ringbereiche B2 und B3 anliegenden Funktionslagen 12 und 20 die Abdichtsicken 18 und 22 zumindest im Wesentlichen nur reversibel abgeflacht, das heißt elastisch verformt sind (sieht man von einer gegebenenfalls vorhandenen geringfügigen plastischen Verformung beim Einbau der Dichtung ab).

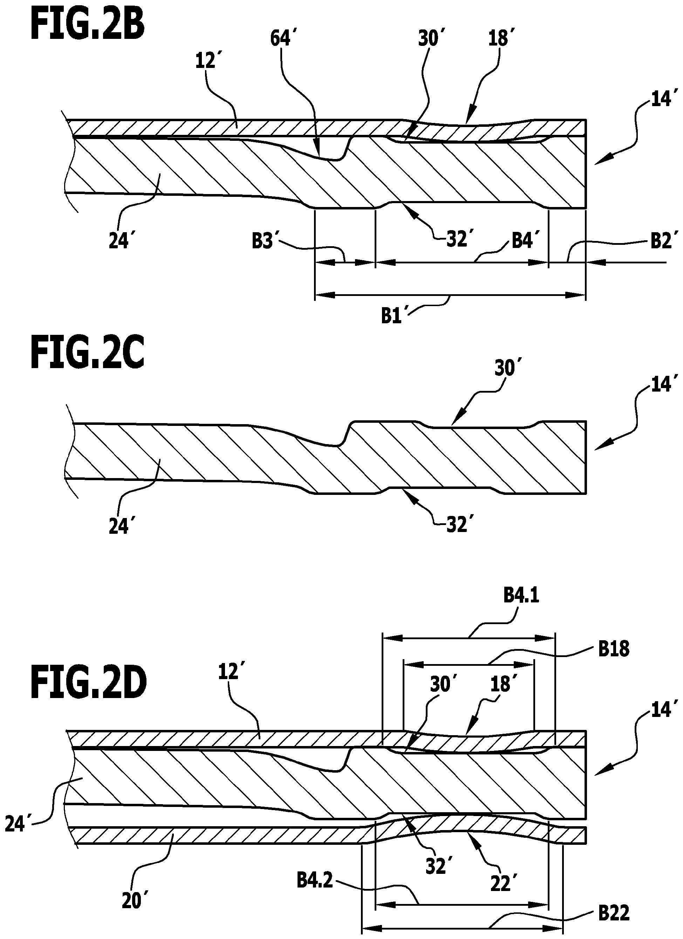

Die der Fig. 2A entsprechende Darstellung einer zweiten Ausführungsform der erfindungsgemäßen Zylinderkopfdichtung in Fig. 2B soll im Folgenden nur insoweit beschrieben werden, als sie von der Ausführungsform gemäß Fig. 2A abweicht, und in Fig. 2B wurden soweit möglich dieselben Bezugszeichen wie in Fig. 2A verwendet, jedoch unter Hinzufügung eines Strichs.

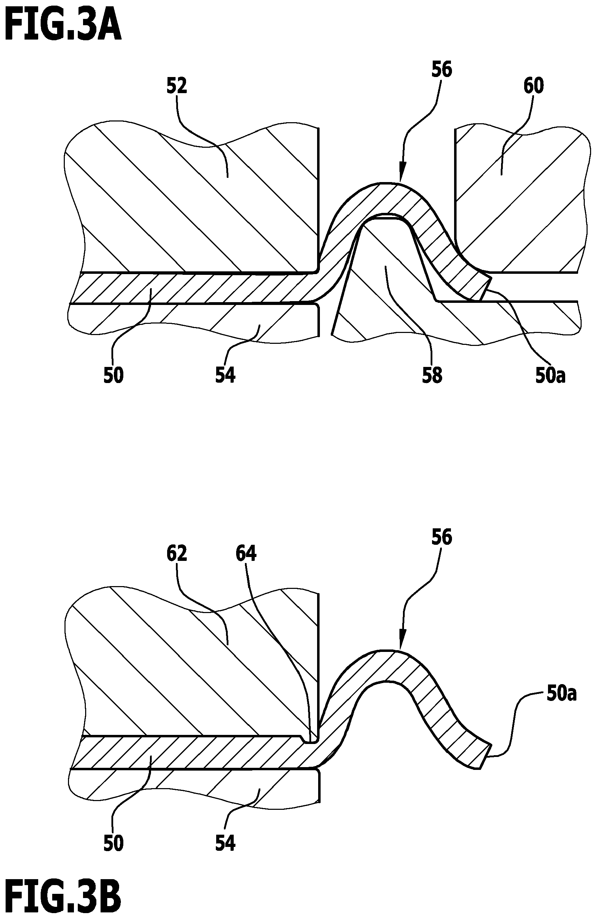

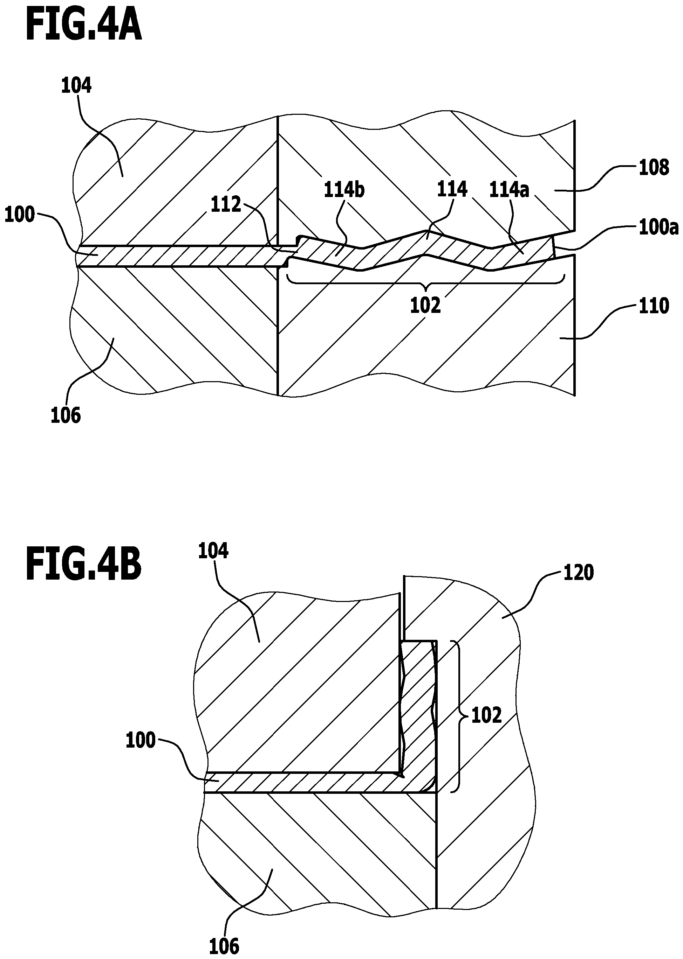

Des Weiteren wird schon jetzt darauf hingewiesen, dass bevorzugte erfindungsgemäße Verfahren für die Herstellung der Innenlage der in Fig. 2B dargestellten Zylinderkopfdichtung anhand der Fig. 3A bis 3D bzw. Fig. 4A bis 4D beschrieben werden.

In Fig. 2B wurde eine der Funktionslage 20 der Ausführungsform gemäß Fig. 2A entsprechende untere Funktionslage der Einfachheit halber weggelassen, obwohl die Innenlage 24' für zwei zu ihren beiden Seiten angeordnete Funktionslagen zwischen verdickten Ringbereichen B2' und B3' jeweils eine Ringnut 30' bzw. 32' aufweist. Bei der in Fig. 2B gezeigten Ausführungsform haben diese beiden Ringnuten unterschiedliche Breiten, welche größer sind als die Breite der benachbarten Abdichtsicke (wobei nur eine der Abdichtsicken, nämlich die Abdichtsicke 18' dargestellt wurde), und die beiden Ringnuten 30' und 32' liegen einander gegenüber (in Richtung der Achse der benachbarten Brennraumöffnung 14'). Wie die Fig. 2B zeigt, ist bei dieser Ausführungsform der Querschnitt einer jeden der Ringnuten 30' und 32' so gestaltet, dass er in den Bereichen der beiden Nutseitenwände gerundet ist, und zwar sowohl beim Übergang in den Nutboden, vor allem aber auch am Übergang in diejenigen Flächen der beiden verdickten Ringbereiche B2' und B3', welche bei eingebauter Dichtung gegen die benachbarten Funktionslagen anliegen; auf diese Weise wird (anders als bei einer Gestaltung gemäß Fig. 2A) eine Kantenpressung zwischen den Funktionslagen und den verdickten Ringbereichen vermieden. Die Fig. 2B zeigt noch eine Ringnut 64', welche aus dem anhand der Figuren 3A bis 3D noch zu beschreibenden Herstellungsverfahren resultiert.

Die Ausführungsformen gemäß den Figuren 2C und 2D unterscheiden sich von der Ausführungsform gemäß Fig. 2B nur in folgender Weise (weshalb in allen diesen drei Figuren dieselben Bezugszeichen verwendet wurden):
In Fig. 2C wurde nur die Innenlage 24' dargestellt, deren Ringnuten 30' und 32' in derselben Weise gestaltet sind wie bei der Ausführungsform gemäß Fig. 2B, jedoch sind bei der Ausführungsform gemäß Fig. 2C diese Ringnuten in bezüglich der Achse der benachbarten Brennraumöffnung 14' radialer Richtung gegeneinander versetzt, so dass sie sich in einer Draufsicht auf die Innenlage 24' nur überlappen. Infolgedessen müssen die zugehörigen Abdichtsicken der beiden die Innenlage 24' zwischen sich aufnehmenden Funktionslagen in derselben Weise gegeneinander versetzt sein.

Die Fig. 2D unterscheidet sich von der Fig. 2B abgesehen davon, dass die Fig. 2D zwei Funktionslagen 12' und 20' zeigt, nur in Folgendem:
Während wie bei der Ausführungsform gemäß Fig. 2D die Ringnut 30' eine Breite B4.1 aufweist, welche größer als die Breite B18 der Abdichtsicke 18' ist, weist die Abdichtsicke 22' der Funktionslage 20' eine Breite B22 auf, welche größer ist als die Breite B4.2 der Ringnut 32' - dies erlaubt die Ringnut 32' aufgrund ihrer Querschnittsform, welche an den Nutseitenwänden abgerundet ist, damit es nicht zu einer Kantenpressung im Bereich der Abdichtsicke 22' der Funktionslage 20' kommt.

Bei der Herstellung der drei in den Figuren 2B bis 2D dargestellten Ausführungsformen der Innenlage 24' wird bevorzugt so vorgegangen, dass die Innenlage 24' zunächst durch Kaltumformen so umgeformt wird, dass sie einen einzigen verdickten Ringbereich aufweist, aus welchem durch Einprägen der Ringnuten 30' und 32' die beiden verdickten Ringbereiche B2' und B3' gebildet werden. Aufgrund des Umform- und des Prägevorgangs weist die Innenlage 24' sowohl in den beiden verdickten Ringbereichen B2' und B3' als auch im Bereich zwischen den beiden Ringnuten 30' und 32' eine Härte auf, welche größer ist als die originäre Härte des für die Herstellung der Innenlage 24' verwendeten Stahlblechs. Dadurch, dass zunächst durch Kaltumformung ein einziger verdickter Ringbereich erzeugt wird, in den dann die beiden Ringnuten 30' und 32' eingeprägt werden, weist die Innenlage 24' in ihrem zwischen diesen beiden Ringnuten liegenden Bereich aufgrund der weiteren Kaltumformung und einer damit einhergehenden Kaltverfestigung dieses Bereichs dort eine noch größere Härte auf als in den beiden verdickten Ringbereichen B2' und B3'. Hervorgehoben werden muss noch, dass die vorstehenden Ausführungen auch für eine abgewandelte Innenlage gelten, der nur eine einzige Funktionslage benachbart ist und die infolgedessen nur eine der Ringnut 30' oder der Ringnut 32' entsprechende Ringnut aufweist. Im Übrigen gilt für die Ausführungsformen gemäß den Figuren 2B bis 2D bezüglich ihres nur in Fig. 2B angegebenen verdickten Ringbereichs B1', dessen verdickten Ringbereichen B2' und B3' sowie der Ringnuten 30' und 32' dasselbe wie für die Ringzone B1 der Innenlage 24 der in Fig. 2A dargestellten Dichtung.

Die Fig. 3A zeigt einen Teil eines Stahlblechs 50, aus dem die Innenlage 24' der in den Figuren 2B bis 2D gezeigten Dichtungen hergestellt werden kann und das zunächst flach und eben ist, ehe es durch Umformen so gestaltet wird, wie dies die Fig. 3A zeigt. Dabei ist in Fig. 3A derjenige Teil des Stahlblechs 50 dargestellt, aus dem der in den Figuren 2B bis 2D gezeigte Teil der Innenlage 24' hergestellt wird.

In einem zeichnerisch nicht dargestellten Verfahrensschritt wird aus dem Stahlblech 50 zunächst eine provisorische Durchgangsöffnung ausgestanzt, aus welcher sich später die Brennraumöffnung 14' der Innenlage 24' ergibt - die bei noch insgesamt flachem Stahlblech 50 um die provisorische Durchgangsöffnung herum verlaufende Kante des Stahlblechs 50 wurde in Fig. 3A mit 50a bezeichnet.

Der gemäß Fig. 3A linke Bereich des Stahlblechs 50 wird sodann in radialem Abstand von der provisorischen Durchgangsöffnung zwischen einem Werkzeugoberteil 52 und einem Werkzeugunterteil 54 so eingespannt, dass sich dieser Bereich des Stahlblechs 50 nicht, und zwar auch nicht in gemäß Fig. 3A horizontaler Richtung bewegen kann, worauf in das Stahlblech 50 eine die provisorische Durchgangsöffnung ringförmig umschließende sickenartige Auswölbung 56 eingeprägt wird, und zwar mittels eines gemäß Fig. 3A vertikal von unten nach oben bewegbaren Prägewerkzeugs 58 und eines während des Prägevorgangs stationären Niederhalters 60. Im Zuge des Prägens der Auswölbung 56 wird die Kante 50a des Stahlblechs 50 gemäß Fig. 3A nach links gezogen und so aus der provisorischen Durchgangsöffnung eine größere, der Brennraumöffnung 14' schon nahezu entsprechende Durchgangsöffnung erzeugt.

In einem nächsten, in Fig. 3B dargestellten Verfahrensschritt, an dem das Prägewerkzeug 58 und der Niederhalter 60 nicht teilhaben, wird in die Oberseite des Stahlblechs 50 am radial äußeren Rand der Auswölbung 56 mittels eines Prägewerkzeugs 62 eine Ringnut 64 eingeprägt, welche die Durchgangsöffnung des Stahlblechs 50 umschließt.

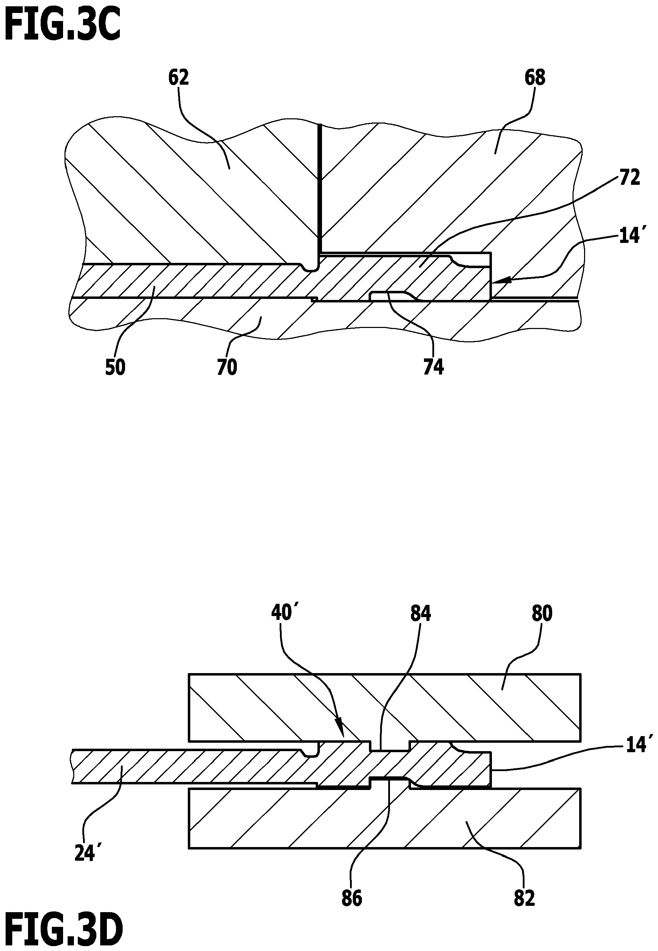

In einem weiteren, in Fig. 3C dargestellten Verfahrensschritt wird einerseits das Stahlblech 50 radial außerhalb der Auswölbung 56 mit Hilfe seiner Ringnut 64 und des Prägewerkzeugs 62 festgehalten und andererseits wird die Auswölbung 56 in vertikaler Richtung komprimiert und planiert, und zwar mit Hilfe eines in vertikaler Richtung beweglichen Prägewerkzeugs 68 und eines Widerlagers 70. Auf diese Weise ergibt sich aus der Auswölbung 56 ein in Fig. 3C gezeigter verdickter Ringbereich 72, welcher beidseits über den unverformten Bereich des Stahlblechs 50 übersteht (bei der dargestellten Ausführungsform ist der Überstand oben wesentlich größer als unten) und oben sowie unten ebene und zueinander parallele Stirnflächen aufweist, welche auch parallel zu den beiden Hauptoberflächen des unverformten Bereichs des Stahlblechs 50 verlaufen.

Das Prägewerkzeug 68 ist so gestaltet und dimensioniert, dass beim Komprimieren und Planieren der Auswölbung 56, das heißt beim Umformen der Auswölbung 56 in den verdickten Ringbereich 72 Letzterer eine solche Form und eine solche Lage erhält, dass die Kante 50a in den Rand der Brennraumöffnung 14' übergeht.

Wie die Fig. 3C erkennen lässt, weist der verdickte Ringbereich 72 an seiner Unterseite noch eine kleine und flache Ringnut 74 auf, welche um die Brennraumöffnung 14' herum verläuft; der Grund für das Vorhandensein dieser Ringnut ist darin zu sehen, dass beim Komprimieren und Planieren der Auswölbung 56 deren konkave Seite nicht vollständig eingeebnet wurde.

Anders als in Fig. 3C dargestellt, können an die Stelle des Prägewerkzeugs 68 und des Widerlagers 70 auch zwei Werkzeugteile treten, deren oberes nur dem Abflachen der Auswölbung 56 dient, deren unteres jedoch nicht nur als Widerlager für den Vorgang des Abflachens der Auswölbung 56 dient, sondern einen gemäß Fig. 3C in vertikaler Richtung nach oben verschiebbaren Bereich mit einer Schrägfläche aufweist, welche gegen die Kante 50a angelegt wird und bei einer Verschiebung nach oben die im Stahlblech 50 vorhandene Durchgangsöffnung vergrößert und dabei im Zuge der Herstellung des Ringbereichs 72 dort zu einer zusätzlichen Verdickung des Stahlblechs führt und gleichzeitig den Durchmesser der Brennraumöffnung 14' kalibriert.

In einem letzten, in Fig. 3D dargestellten Schritt des Herstellungsverfahrens werden mittels zweier Prägewerkzeuge 80 und 82 an der Ober- und der Unterseite des verdickten Ringbereichs 72 in diesen Ringnuten 84 und 86 eingeprägt, so dass sich der in Fig. 2B dargestellte verdickte Ringbereich B1' der Innenlage 24' ergibt.

Falls erforderlich, kann die Innenlage 24' auch noch nachgestanzt werden, um die Brennraumöffnung 14' mit ihrem endgültigen Durchmesser herzustellen. Es sei noch darauf hingewiesen, dass das anhand der Figuren 3A bis 3C beschriebene Verfahren grundsätzlich auch zu einer separaten Herstellung eines jeden der verdickten Ringbereiche B2 und B3 der Dichtung gemäß Fig. 2A verwendet werden kann (dann entfällt der anhand der Fig. 3D geschilderte Schritt des Herstellens der beiden Ringnuten 84 und 86).

Anhand der Fig. 4A bis 4D wird schließlich ein Verfahren beschrieben, mit welchem sich ein verdickter Ringbereich analog dem in Fig. 3C dargestellten Ringbereich 72 erzeugen lässt, in welchen dann noch die in Fig. 3D gezeigten Ringnuten 84 und 86 eingeprägt werden, mit dem sich aber auch der radial innere verdickte Ringbereich B2 der Ausführungsform gemäß Fig. 2A oder eine verdickte Ringzone analog der Ringzone B1' der Ausführungsform gemäß Fig. 2B herstellen lässt, wobei auch im letztgenannten Fall dann noch Ringnuten entsprechend den Ringnuten 30' und 32' eingeprägt werden müssen.

Die Fig. 4A zeigt ein Stahlblech 100 mit einem gemäß Fig. 4A linken unverformten Bereich und einer freien, rechten Kante 100a einer in dem Stahlblech 100 erzeugten provisorischen Durchgangsöffnung, an welche sich radial nach außen, das heißt gemäß Fig. 4A nach links eine Ringzone 102 anschließt, welche, anders als in Fig. 4A dargestellt, zunächst flach und eben ist und stufenlos in den gemäß Fig. 4A linken Bereich des Stahlblechs 100 übergeht.

Der nicht zu verformende, gemäß Fig. 4A linke Bereich des Stahlblechs 100 wird, wie in Fig. 4A gezeigt, zwischen Spannbacken 104 und 106 eingespannt, worauf mit einem oberen und einem unteren Werkzeugteil 108 bzw. 110 eines Prägewerkzeugs in die Ringzone 102 ein Profil eingeprägt wird, dessen Querschnitt einem flachen W ähnlich ist und über eine Querschnittsverjüngung 112 in den eingespannten Bereich des Stahlblechs 100 übergeht. Das Querschnittsprofil der Ringzone 102 hat also eine Auswölbung 114 und zwei nach oben geneigte Schenkel 114a und 114b.

In einem zeichnerisch nicht dargestellten Verfahrensschritt wird die Ringzone 102 um die Querschnittsverjüngung 112 um 90° nach oben umgebogen, so dass sich eine Vorstufe der in Fig. 4B gezeigte Form des Stahlblechs 100 ergibt. Sodann wird die untere Spannbacke 106 gemäß Fig. 4A etwas nach rechts verschoben, so dass sie die in Fig. 4B dargestellte Position einnimmt. Anschließend wird durch einen in Fig. 4B gezeigten Stempel 120 die Ringzone 102 quer zu ihrer Längserstreckung komprimiert, nämlich durch eine Verschiebung des Stempels 120 nach unten bis in die in Fig. 4B dargestellte Position; dadurch wird die Materialdicke des Stahlblechs 100 im Bereich der Ringzone 102 vergrößert, da Letztere jedoch zwischen dem Stempel 120 und der Spannbacke 104 eingeschlossen ist, kann sich das Stahlblech der Ringzone 102 in gemäß Fig. 4B horizontaler Richtung nicht wesentlich verwerfen oder auswölben.

Die angestrebte Vergrößerung der Materialdicke des Stahlblechs 100 im Bereich der Ringzone 102 setzt aber voraus, dass das Stahlblech 100 vor dem Verschieben des Stempels 120 gemäß Fig. 4B nach unten zwischen Letzterem und der Spannbacke 104 einen für die gewünschte Materialdickenvergrößerung erforderlichen Freiraum hat; dieser hat zur Folge, dass sich das Stahlblech 100 im Bereich der Ringzone 102 im Zuge der Materialdickenvergrößerung, das heißt des Stauchens des Stahlblechs etwas verwirft, so wie dies in Fig. 4B angedeutet wurde. Durch die in Fig. 4A dargestellte Profilierung der Ringzone 102 wird erreicht, dass sich das Stahlblech 100 beim Stauchen der Ringzone 102 an durch diese Profilierung vorgegebenen Stellen verwirft oder wellt. Es hat sich nun gezeigt, dass im Zuge des vorstehend beschriebenen Stauchens des Stahlblechs 100 in dessen Ringzone 102 und der damit einhergehenden Verwerfung das Material des Stahlblechs 100 bereichsweise so fließt, dass es vorteilhaft ist, die in den Figuren 2B bis 2D gezeigten Ringnuten 30' und 32' analog der Darstellung in Fig. 2D gegeneinander etwas zu versetzen.

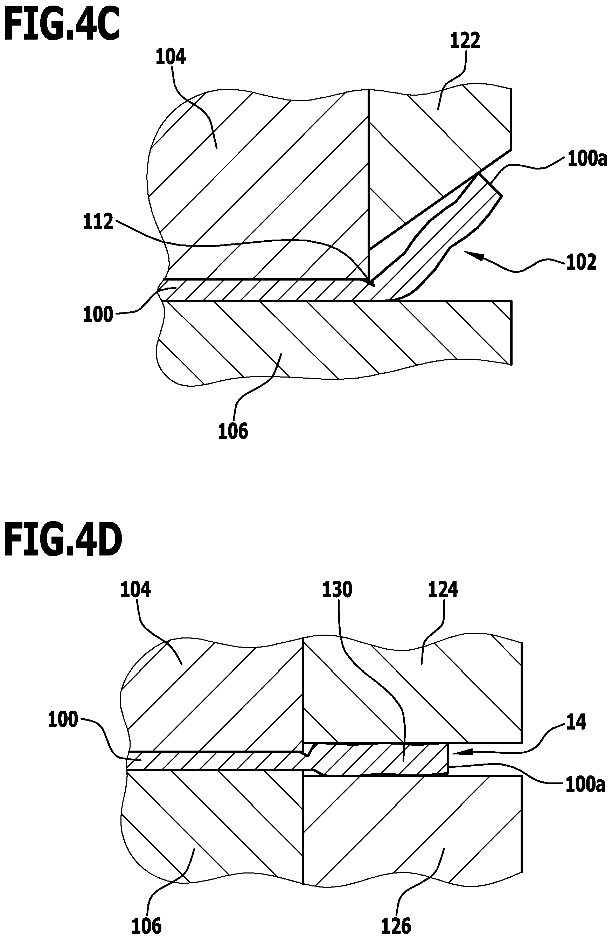

Wie in Fig. 4C dargestellt, wird die Ringzone 102 mittels eines Stempels 122 um die Querschnittsverjüngung 112 wieder nach unten geschwenkt und dann zwischen zwei in Fig. 4D gezeigten Werkzeugteilen 124 und 126 in Richtung senkrecht zum unverformten Bereich des Stahlblechs 100 so komprimiert, dass sich ein kompakter verdickter Ringbereich 130 ergibt, welcher der verdickten Ringzone B1 der Ausführungsform gemäß Fig. 2A entsprechen kann. Wie die Fig. 4D zeigt, entspricht der Querschnitt des verdickten Ringbereichs 130 nahezu einem Rechteck, und die Dicke dieses verdickten Ringbereichs ist deutlich größer als die Dicke des originären Stahlblechs 100.

Ebenso wie bei dem anhand der Fig. 3A bis 3D beschriebenen Herstellverfahren wandert bei dem Verfahren gemäß den Fig. 4A bis 4D die am Ende die Brennraumöffnung 14 bzw. 14' definierende Kante 100a bei den in den Fig. 4A und 4B gezeigten Verfahrensschritten in Richtung auf den unverformten Bereich des Stahlblechs bzw. der Dichtungslage, so dass sich aus einer in das Stahlblech zunächst eingebrachten provisorischen Durchgangsöffnung eine größere endgültige Mediendurchgangsöffnung bzw. Brennraumöffnung ergibt.

Allen Ausführungsformen ist daher gemeinsam, dass das Material für die Erzeugung des mindestens einen verdickten Ringbereichs einer erfindungsgemäßen Flachdichtung von demjenigen freien Rand des für die Innenlage bzw. die zweite Dichtungslage verwendeten zweiten Stahlblechs hergeholt wird, welcher die zunächst erzeugte provisorische Durchgangsöffnung definiert.

Ein wesentlicher Vorteil bzw. ein wesentliches Merkmal der Erfindung besteht auch darin, dass der radial innere und der radial äußere Stopper eines erfindungsgemäßen Doppelstoppers ohne weiteres unterschiedliche Dicken bzw. Höhen und/oder einer der Stopper oder beide Stopper ein Höhenprofil bzw. unterschiedliche Höhenprofile aufweisen können, denn hierzu muss nur das Prägewerkzeug 68 oder mindestens eines der Prägewerkzeuge 80 und 82 oder mindestens eines der Werkzeugteile 124 und 126 entsprechend gestaltet sein.

## Patentansprüche

1. Metallische Flachdichtung mit einer mindestens eine Mediendurchgangsöffnung (14) aufweisenden Dichtungsplatte (10), welche im Bereich der Mediendurchgangsöffnung (14) mindestens eine Federstahl-Funktionslage (12, 20) aus einem ersten Stahlblech mit einer die Mediendurchgangsöffnung (14) umschließenden und als Vollsicke mit einem zwischen zwei Sickenfüßen angeordneten Sickenkamm ausgebildeten Abdichtsicke (18, 22) sowie eine der Funktionslage (12, 20) unmittelbar benachbarte zweite Dichtungslage (24) aus einem im Vergleich zu Federstahl leichter umformbaren zweiten Stahlblech aufweist, welche um die Mediendurchgangsöffnung (14) herum eine dieser benachbarte Ringzone (B1) und Letzterer bezüglich der Mediendurchgangsöffnung radial nach außen benachbart eine originäre Dicke sowie eine originäre Härte des zweiten Stahlblechs (24) aufweist, wobei die zweite Dichtungslage (24) in ihrer Ringzone (B1) mindestens einen gegenüber der originären Dicke des zweiten Stahlblechs verdickten Ringbereich aufweist, welcher sich in einer Draufsicht auf die Dichtungsplatte (10) längs der Abdichtsicke (18, 22) erstreckt und auf der der Funktionslage (12, 20) zugekehrten Seite der zweiten Dichtungslage (24) eine Ringnut (30, 32) bildet, wobei die zweite Dichtungslage (24) in dem durch bereichsweises Umformen des zweiten Stahlblechs erzeugten verdickten Ringbereich (B1) eine auf einer aufgrund des Umformens vorliegenden bereichsweisen Kaltverfestigung des zweiten Stahlblechs beruhende größere Härte als die originäre Härte des zweiten Stahlblechs aufweist, **dadurch gekennzeichnet, dass** bei gepresster Flachdichtung die Abdichtsicke (18, 22) mit ihrem Sickenkamm in die Ringnut (30, 32) eingreift, wobei
(a) die Ringzone (B1) nur einen verdickten Ringbereich aufweist, in welchen auf mindestens einer Seite der zweiten Dichtungslage eine Ringnut (30, 32) eingeprägt ist, oder
(b) die Ringzone zwei in bezüglich der Mediendurchgangsöffnung radialer Richtung hintereinander und im Abstand voneinander angeordnete verdickte Ringbereiche aufweist, welche zwischen sich die Ringnut bilden.

2. Flachdichtung nach Anspruch 1, bei der die zweite Dichtungslage unmittelbar zwischen zwei Federstahl-Funktionslagen angeordnet ist, deren jede eine die Mediendurchgangsöffnung umschließende Abdichtsicke aufweist, wobei der mindestens eine verdickte Bereich auf jeder Seite der zweiten Dichtungslage eine Ringnut bildet und bei gepresster Flachdichtung die Abdichtsicken mit ihren Sickenkämmen in diese Ringnuten eingreifen.

3. Flachdichtung nach Anspruch 2, **dadurch gekennzeichnet, dass** in einem Schnitt durch die Dichtungsplatte längs einer die Achse der Mediendurchgangsöffnung enthaltenden Ebene die Ringnuten der beiden Lagenseiten in bezüglich dieser Achse radialer Richtung gegeneinander versetzt sind und dass die Abdichtsicken der beiden Funktionslagen in gleicher Weise gegeneinander versetzt sind.

4. Flachdichtung nach Anspruch 3, **dadurch gekennzeichnet, dass** in einer Draufsicht auf die Dichtungsplatte die an den beiden Lagenseiten vorgesehenen Ringnuten einander überlappen.

5. Flachdichtung nach Anspruch 1 oder 2, bei der die zweite Dichtungslage zwischen den beiden voneinander beabstandeten verdickten Ringbereichen zumindest ungefähr die originäre Dicke sowie die originäre Härte des zweiten Stahlblechs aufweist.

6. Flachdichtung nach einem der Ansprüche 1 bis 5, bei der der mindestens eine verdickte Ringbereich auf beiden Seiten der zweiten Dichtungslage über den radial nach außen an die Ringzone angrenzenden Bereich der zweiten Dichtungslage vorspringt.

7. Flachdichtung nach einem der vorstehenden Ansprüche, bei der die bezüglich der Mediendurchgangsöffnung radiale Breite der Ringzone maximal ungefähr das Zweifache des radialen Abstands des Sickenkamms vom Außenrand der Mediendurchgangsöffnung beträgt.

8. Flachdichtung nach einem der vorstehenden Ansprüche, bei der sich der verdickte Ringbereich bis zum Außenrand der Mediendurchgangsöffnung erstreckt.

9. Flachdichtung nach einem der vorstehenden Ansprüche, bei der die Breite der Ringnut gleich der bzw. größer als die Breite der dieser Ringnut zugeordneten Abdichtsicke ist.

10. Flachdichtung nach Anspruch 9, bei der die Tiefe der Ringnut derart bemessen ist, dass bei gepresster Flachdichtung und zu beiden Seiten der Ringnut gegen den mindestens einen verdickten Ringbereich anliegender Funktionslage im Dichtungsbetrieb die Abdichtsicke ausschließlich reversibel, das heißt elastisch verformt wird.

11. Verfahren zur Herstellung einer metallischen Flachdichtung mit einer mindestens eine Mediendurchgangsöffnung (14) aufweisenden Dichtungsplatte (10), welche im Bereich der
Mediendurchgangsöffnung mindestens eine Federstahl-Funktionslage (12, 20) aus einem ersten Stahlblech mit einer die Mediendurchgangsöffnung umschließenden und als Vollsicke ausgebildeten Abdichtsicke (18, 22) sowie eine der Funktionslage unmittelbar benachbarte zweite Dichtungslage (24) aus einem im Vergleich zu Federstahl leichter umformbaren zweiten Stahlblech aufweist, welche um die Durchgangsöffnung (14) herum eine dieser benachbarte Ringzone (B1) und Letzterer bezüglich der Mediendurchgangsöffnung radial nach außen benachbart eine originäre Dicke des zweiten Stahlblechs aufweist, wobei die zweite Dichtungslage (24) in ihrer Ringzone (B1) mindestens einen gegenüber der originären Dicke des zweiten Stahlblechs verdickten Ringbereich aufweist, welcher sich in einer Draufsicht auf die
Dichtungsplatte (10) längs der Abdichtsicke (18, 22) erstreckt, wobei zur Erzeugung des verdickten Ringbereichs in das für die zweite Dichtungslage (24)
verwendete zweite Stahlblech eine zu der in Letzterem zu erzeugenden Mediendurchgangsöffnung (14) konzentrische provisorische Durchgangsöffnung eingebracht wird, deren Durchmesser kleiner als derjenige der Mediendurchgangsöffnung ist, worauf das zweite Stahlblech vom Rand der provisorischen Durchgangsöffnung her so gestaucht wird,
dass sich ein Rohling des verdickten Ringbereichs (B1) ergibt, und dieser Rohling durch Prägen in die Gestalt des verdickten Ringbereichs gebracht wird, **dadurch gekennzeichnet, dass** in dem verdickten Ringbereich (B1) auf der der Funktionslage (12, 20) zugekehrten Seite der zweiten Dichtungslage (24) eine solche Ringnut (30, 32) gebildet wird, dass bei gepresster Flachdichtung die Abdichtsicke (18, 22) mit ihrem Sickenkamm in die Ringnut (30, 32) eingreift.

12. Verfahren zur Herstellung einer metallischen Flachdichtung mit einer mindestens eine Mediendurchgangsöffnung (14) aufweisenden Dichtungsplatte (10), welche im Bereich der Mediendurchgangsöffnung mindestens eine Federstahl-Funktionslage (12, 20) aus einem ersten Stahlblech mit einer die Mediendurchgangsöffnung umschließenden und als Vollsicke ausgebildeten Abdichtsicke (18, 22) sowie eine der Funktionslage unmittelbar benachbarte zweite Dichtungslage (24) aus einem im Vergleich zu Federstahl leichter umformbaren zweiten Stahlblech aufweist, welche um die Durchgangsöffnung (14) herum eine dieser benachbarte Ringzone (102) und Letzterer bezüglich der Mediendurchgangsöffnung radial nach außen benachbart eine originäre Dicke des zweiten Stahlblechs (24) aufweist, wobei die zweite Dichtungslage in ihrer Ringzone (102) mindestens einen gegenüber der originären Dicke des zweiten Stahlblechs verdickten Ringbereich aufweist, welcher sich in einer Draufsicht auf die Dichtungsplatte (10) längs der Abdichtsicke (18, 22) erstreckt und auf der der Funktionslage (12, 20) zugekehrten Seite der zweiten Dichtungslage (24) eine Ringnut (30, 32) bildet, wobei zur Erzeugung des verdickten Ringbereichs (B1) in das für die zweite Dichtungslage (24) verwendete zweite Stahlblech eine zu der in Letzterem zu erzeugenden Mediendurchgangsöffnung konzentrische provisorische Durchgangsöffnung eingebracht wird, deren Durchmesser kleiner als derjenige der Mediendurchgangsöffnung ist, worauf eine die provisorische Durchgangsöffnung ringförmig umschließende Auswölbung (114) so in das zweite Stahlblech eingeprägt wird, dass dabei der Außenrand der provisorischen Durchgangsöffnung radial nach außen gezogen wird, worauf der mit der Auswölbung (114) versehene Bereich des zweiten Stahlblechs durch Prägen in die Gestalt des verdickten Ringbereichs (B1) gebracht wird, **dadurch gekennzeichnet, dass** in dem verdickten Ringbereich eine solche Ringnut (30, 32) gebildet wird, dass bei gepresster Flachdichtung die Abdichtsicke (18, 22) mit ihrem Sickenkamm in die Ringnut (30, 32) eingreift.

13. Verfahren nach Anspruch 11 oder 12, bei dem die Ringnut (30, 32) in den verdickten Ringbereich (B1) eingeprägt wird.

14. Verfahren nach Anspruch 11 und/oder 12, bei dem im zweiten Stahlblech zwei verdickte Ringbereiche (B2, B3) in bezüglich der Mediendurchgangsöffnung radialem Abstand voneinander erzeugt werden, welche die Ringnut (30, 32) zwischen sich aufnehmen.

15. Verfahren nach Anspruch 14, wobei der bezüglich der Mediendurchgangsöffnung radial innere verdickte Ringbereich (B2) gemäß Anspruch 11 und der radial äußere verdickte Ringbereich (B3) gemäß Anspruch 12 erzeugt wird.

16. Verfahren nach Anspruch 14, **dadurch gekennzeichnet, dass** beide verdickte Ringbereiche (B2, B3) gemäß Anspruch 12 erzeugt werden.

## Claims

1. A metallic flat gasket comprising a sealing plate (10) having at least one media-passage opening (14) and having, in the region of the media-passage opening (14), at least one spring steel functional layer (12,20) formed of a first steel sheet with a sealing bead (18, 22) that surrounds the media-passage opening (14) and is formed as a full bead with a bead crest arranged between two bead feet, and also a second sealing layer (24), which is directly adjacent to the functional layer (12,20) and is formed of a second steel sheet, which is more easily deformable compared with spring steel, which second sealing layer has, around the media-passage opening (14), an annular zone (B1) adjacent thereto and, radially outwardly adjacently to said annular zone relative to the media-passage opening, has an original thickness and an original hardness of the second steel sheet (24), wherein the second sealing layer (24) in its annular zone (B1) has at least one annular region that is thickened compared with the original thickness of the second steel sheet, which thickened annular region extends along the sealing bead (18,22) in a plan view of the sealing plate (10) and on the side of the second sealing layer (24) facing towards the functional layer (12,20) forms an annular groove (30,32), wherein the second sealing layer (24) in the thickened annular region (B1) produced by deforming some sections of the second steel sheet has a greater hardness, based on a strain hardening in some sections of the second steel sheet on account of the deformation, than the original hardness of the second steel sheet, **characterised in that**, when the flat gasket is pressed, the sealing bead (18,22) engages with its bead crest in the annular groove (30,32), wherein
(a) the annular zone (B1) has only one thickened annular region, into which an annular groove (30,32) is impressed on at least one side of the second sealing layer, or
(b) the annular zone has, in the radial direction relative to the media-passage opening, two thickened annular regions arranged one behind the other and spaced apart from one another which form the annular groove between them.

2. The flat gasket according to claim 1, in which the second sealing layer is arranged directly between two spring steel functional layers, each of which has a sealing bead surrounding the media-passage opening, wherein the at least one thickened region on each side of the second sealing layer forms an annular groove, and when the flat gasket is pressed the sealing beads engage with their sealing crests in these annular grooves.

3. The flat gasket according to claim 2, **characterised in that**, in a section through the sealing plate along a plane containing the axis of the media-passage opening, the annular grooves of the two layer sides are offset from one another in the radial direction relative to this axis, and **in that** the sealing beads of the two functional layers are offset from one another in the same manner.

4. The flat gasket according to claim 3, **characterised in that**, in a plan view of the sealing plate, the annular grooves provided on the two layer sides overlap one another.

5. The flat gasket according to claim 1 or 2, in which the second sealing layer, between the two mutually spaced thickened annular regions, has at least approximately the original thickness and the original hardness of the second steel sheet.

6. The flat gasket according to one of claims 1 to 5, in which the at least one thickened annular region on both sides of the second sealing layer protrudes beyond the region of the second sealing layer radially outwardly bordering the annular zone.

7. The flat gasket according to one of the preceding claims, in which the radial width of the annular zone relative to the media-passage opening is at most approximately twice the radial spacing of the bead crest from the outer edge of the media-passage opening.

8. The flat gasket according to one of the preceding claims, in which the thickened annular region extends as far as the outer edge of the media-passage opening.

9. The flat gasket according to one of the preceding claims, in which the width of the annular groove is the same size as or larger than the width of the sealing bead associated with this annular groove.

10. The flat gasket according to claim 9, in which the depth of the annular groove is dimensioned such that, when the flat gasket is pressed and when a functional layer bears in sealing operation on each side of the annular groove against the at least one thickened annular region, the sealing bead is deformed exclusively reversibly, i.e. elastically.

11. A method for producing a metallic flat gasket comprising a sealing plate (10) having at least one media-passage opening (14) and having, in the region of the media-passage opening, at least one spring steel functional layer (12, 20) formed of a first steel sheet with a sealing bead (18,22) that surrounds the media-passage opening and is formed as a full bead, and also a second sealing layer (24), which is directly adjacent to the functional layer and is formed of a second steel sheet, which is more easily deformable compared with spring steel, which second sealing layer has, around the passage opening (14), an annular zone (B1) adjacent thereto and radially outwardly adjacently to said annular zone relative to the media-passage opening, has an original thickness of the second steel sheet, wherein the second sealing layer (24) in its annular zone (B1) has at least one annular region that is thickened compared with the original thickness of the second sheet steel, which thickened annular region extends along the sealing bead (18,22) in a plan view of the sealing plate (10), wherein, in order to produce the thickened annular region, a temporary passage opening concentric with the media-passage opening (14) to be produced in the second steel sheet used for the second sealing layer (24) is made in said second steel sheet, the diameter of said temporary passage opening being smaller than that of the media-passage opening, whereupon the second steel sheet is compressed from the edge of the temporary through-opening, such that a blank of the thickened annular region (B1) is produced, and this blank is brought by embossing into the form of the thickened annular region, **characterised in that** in the thickened annular region (B1) there is formed on the side of the second sealing layer (24) facing towards the functional layer (12,20) such an annular groove (30,32) that, when the flat gasket is pressed, the sealing bead (18,22) engages with its bead crest in the annular groove (30,32).

12. A method for producing a metallic flat gasket comprising a sealing plate (10) having at least one media-passage opening (14) and having, in the region of the media-passage opening, at least one spring steel functional layer (12, 20) formed of a first steel sheet with a sealing bead (18,22) that surrounds the media-passage opening and is formed as a full bead, and also a second sealing layer (24), which is directly adjacent to the functional layer and is formed of a second steel sheet, which is more easily deformable compared with spring steel, which second sealing layer has, around the passage opening (14), an annular zone (102) adjacent thereto and, radially outwardly adjacently to said annular zone relative to the media-passage opening, has an original thickness of the second steel sheet (24), wherein the second sealing layer in its annular zone (102) has at least one annular region that is thickened compared with the original thickness of the second sheet steel, which thickened annular region extends along the sealing bead (18,22) in a plan view of the sealing plate (10) and on the side of the second sealing layer (24) facing towards the functional layer (12, 20) forms an annular groove (30, 32), wherein, in order to produce the thickened annular region (B1), a temporary passage opening concentric with the media-passage opening to be produced in the second steel sheet used for the second sealing layer (24) is made in said second steel sheet, the diameter of said passage opening being smaller than that of the media-passage opening, whereupon a bulge (114) surrounding the temporary passage opening in an annular fashion is impressed into the second steel sheet such that the outer edge of the temporary passage opening is drawn radially outwardly, and the region of the second steel sheet provided with the bulge (114) is brought by embossing into the form of the thickened annular region (B1), **characterised in that** there is formed in the thickened annular region such an annular groove (30,32) that, when the flat gasket is pressed, the sealing bead (18,22) engages with its bead crest in the annular groove (30,32).

13. The method according to claim 11 or 12, in which the annular groove (30,32) is impressed into the thickened annular region (B1).

14. The method according to claim 11 and/or 12, in which two thickened annular regions (B2, B3) are produced in the second steel sheet at a radial spacing from one another relative to the media passage opening, which annular regions accommodate the annular groove (30, 32) between them.

15. The method according to claim 14, wherein the radially inner thickened annular region (B2) relative to the media-passage opening is produced in accordance with claim 11 and the radially outer thickened annular region (B3) is produced in accordance with claim 12.

16. The method according to claim 14, **characterised in that** both thickened annular regions (B2, B3) are produced in accordance with claim 12.

## Revendications

1. Joint plat métallique d'étanchéité, doté d'au moins une plaque d'étanchéité (10) présentant un orifice de passage de fluides (14), laquelle plaque présente, au niveau de l'orifice de passage de fluides (14) au moins une couche fonctionnelle en acier à ressorts (12, 20) constituée d'une première tôle en acier dotée d'une moulure d'étanchéité (18, 22) entourant l'orifice de passage de fluides (14) et configurée comme moulure pleine dotée d'une crête disposée entre deux pieds de moulure, ainsi qu'une deuxième couche d'étanchéité (24) directement adjacente à la couche fonctionnelle (12, 20) et constituée d'une deuxième tôle en acier plus facilement déformable que l'acier à ressorts, laquelle tôle présente, autour de l'orifice de passage de fluides (14) une zone annulaire (B1) voisine de celui-ci et a une épaisseur d'origine au voisinage de cette zone annulaire radialement vers l'extérieur relativement à l'orifice de passage de fluides ainsi qu'une dureté d'origine de la deuxième tôle en acier (24), la deuxième couche d'étanchéité (24) présentant, dans sa zone annulaire (B1), au moins un domaine annulaire plus épais par rapport à l'épaisseur d'origine de la deuxième tôle en acier, lequel domaine annulaire s'étend, sur la vue de dessus de la plaque d'étanchéité (10), le long de la moulure d'étanchéité (18, 22) et forme une rainure annulaire (30, 32) sur le côté de la deuxième couche d'étanchéité (24) dirigé vers la couche fonctionnelle (12, 24), la deuxième couche d'étanchéité (24) ayant, dans le domaine annulaire plus épais (B1), générée par la déformation sur certains domaines de la deuxième tôle en acier, une dureté plus importante que la dureté d'origine de la deuxième tôle en acier due à un écrouissage de la deuxième tôle en acier sur certains domaines existant du fait de la déformation, **caractérisé en ce que**, lorsque le joint plat d'étanchéité est compressé, la moulure d'étanchéité (18, 22) entre en prise dans la rainure annulaire (30, 32) avec sa crête de moulure,
(a) la zone annulaire (B1) ne présentant qu'un domaine annulaire plus épais dans lequel une rainure annulaire (30, 32) est estampée sur au moins un côté de la deuxième couche d'étanchéité, ou
(b) la zone annulaire présente deux domaines annulaires plus épais disposés, dans le sens radial, l'un derrière l'autre et à distance l'un de l'autre relativement à l'orifice de passage de fluides, lesquels domaines annulaires forment entre eux la rainure annulaire.

2. Joint plat d'étanchéité selon la revendication 1, dans lequel la deuxième couche d'étanchéité est disposée directement entre deux couches fonctionnelles en acier à ressorts, dont chacune présente une moulure d'étanchéité entourant l'orifice de passage de fluides, l'au moins un domaine plus épais formant une rainure annulaire sur chaque côté de la deuxième couche d'étanchéité et, lorsque le joint plat d'étanchéité est compressé, les moulures d'étanchéité entrant en prise, avec leurs crêtes, dans ces rainures annulaires.

3. Joint plat d'étanchéité selon la revendication 2, **caractérisé en ce que**, dans une coupe à travers la plaque d'étanchéité le long d'un plan contenant l'axe de l'orifice de passage de fluides, les rainures annulaires des deux côtés de couche sont décalées l'une par rapport à l'autre relativement à cet axe dans le sens radial et **en ce que** les moulures d'étanchéité des deux couches fonctionnelles sont décalées l'une par rapport à l'autre de la même manière.

4. Joint plat d'étanchéité selon la revendication 3, **caractérisé en ce que**, sur une vue de dessus de la plaque d'étanchéité, les rainures annulaires prévues sur les deux côtés de couche se chevauchent l'une l'autre.

5. Joint plat d'étanchéité selon la revendication 1 ou la revendication 2, dans lequel la deuxième couche d'étanchéité présente, entre les deux domaines annulaires plus épais à distance l'un de l'autre, au moins approximativement, l'épaisseur d'origine ainsi que la dureté d'origine de la deuxième tôle en acier.

6. Joint plat d'étanchéité selon l'une quelconque des revendications 1 à 5, dans lequel l'au moins un domaine annulaire plus épais est en saillie sur les deux côtés de la deuxième couche d'étanchéité au-dessus du domaine de la deuxième couche d'étanchéité adjacent radialement vers l'extérieur par rapport à la zone annulaire.

7. Joint plat d'étanchéité selon l'une quelconque des revendications précédentes, dans lequel la largeur radiale de la zone annulaire relativement à l'orifice de passage de fluides est égale au maximum approximativement au double de la distance radiale de la crête de moulure par rapport au bord externe de l'orifice de passage de fluides.

8. Joint plat d'étanchéité selon l'une quelconque des revendications précédentes, dans lequel le domaine annulaire plus épais s'étend jusqu'au bord externe de l'orifice de passage de fluides.

9. Joint plat d'étanchéité selon l'une quelconque des revendications précédentes, dans lequel la largeur de la rainure annulaire est égale ou supérieure à la largeur de la moulure d'étanchéité affectée à cette rainure annulaire.

10. Joint plat d'étanchéité selon la revendication 9, dans laquelle la profondeur de la rainure annulaire est dimensionnée de telle façon que lorsque le joint plat d'étanchéité est compressé et la couche fonctionnelle avoisinant l'au moins un domaine annulaire plus épais a chaque des deux côtés de la rainure annulaire, lorsque le joint d'étanchéité est en service la moulure d'étanchéité est déformée de manière exclusivement réversible, autrement dit de façon élastique.

11. Procédé de fabrication d'un joint plat métallique d'étanchéité doté d'au moins une plaque d'étanchéité (10) présentant un orifice de passage de fluides (14), laquelle plaque présente, au niveau de l'orifice de passage de fluides (14), au moins une couche fonctionnelle en acier à ressorts (12, 20) constituée d'une première tôle en acier dotée d'une moulure d'étanchéité (18, 22) entourant l'orifice de passage de fluides (14) et configurée comme moulure pleine, ainsi qu'une deuxième couche d'étanchéité (24) directement adjacente à la couche fonctionnelle et constituée d'une deuxième tôle en acier plus facilement déformable que l'acier à ressorts, laquelle tôle présente, autour de l'orifice de passage de fluides (14) une zone annulaire (B1) voisine de celui-ci et a au voisinage de cette zone annulaire une épaisseur d'origine voisine radialement vers l'extérieur relativement à l'orifice de passage de fluides, la deuxième couche d'étanchéité (24) présentant, dans sa zone annulaire (B1) au moins un domaine annulaire plus épais par rapport à l'épaisseur d'origine de la deuxième tôle en acier, lequel domaine annulaire s'étend, sur la vue de dessus de la plaque d'étanchéité (10), le long de la moulure d'étanchéité (18, 22), procédé dans lequel on ménage dans la deuxième tôle d'acier utilisée pour la deuxième couche d'étanchéité (24) un orifice de passage provisoire, concentrique par rapport à l'orifice de passage de fluides (14) à générer dans la deuxième tôle en acier afin de générer le domaine annulaire plus épais, le diamètre de cet orifice de passage provisoire étant plus petit que celui de l'orifice de passage de fluides, à la suite de quoi on bat la deuxième tôle en acier à partir du bord de l'orifice de passage provisoire de manière à obtenir une ébauche du domaine annulaire plus épais (B1) et à donner, par estampage, à cette ébauche la forme du domaine annulaire plus épais, **caractérisé en ce que** l'on forme dans le domaine annulaire plus épais (B1) une rainure annulaire (30, 32) sur le côté, dirigé vers la couche fonctionnelle (12, 20), de la deuxième couche d'étanchéité (24), de telle sorte que lorsque le joint plat d'étanchéité est compressé, la moulure d'étanchéité (18, 22) entre en prise dans la rainure annulaire (30, 32) avec sa crête.

12. Procédé de fabrication d'un joint plat métallique d'étanchéité doté d'au moins une plaque d'étanchéité (10) présentant un orifice de passage de fluides (14), laquelle plaque présente, au niveau de l'orifice de passage de fluides (14), au moins une couche fonctionnelle en acier à ressorts (12, 20) constituée d'une première tôle en acier dotée d'une moulure d'étanchéité (18, 22) entourant l'orifice de passage de fluides et configurée comme moulure pleine, ainsi qu'une deuxième couche d'étanchéité (24) directement adjacente à la couche fonctionnelle et constituée d'une deuxième tôle en acier plus facilement déformable que l'acier à ressorts, laquelle tôle présente, autour de l'orifice de passage (14), une zone annulaire (B1) voisine de celui-ci et a une épaisseur d'origine de la deuxième tôle en acier (24) voisine radialement vers l'extérieur de la zone annulaire relativement à l'orifice de passage de fluides, la deuxième couche d'étanchéité présentant, dans sa zone annulaire (102), au moins un domaine annulaire plus épais par rapport à l'épaisseur d'origine de la deuxième tôle en acier, lequel domaine annulaire s'étend, sur la vue de dessus de la plaque d'étanchéité (10), le long de la moulure d'étanchéité (18, 22) et forme une rainure annulaire (30, 32) sur le côté de la deuxième couche d'étanchéité (24) dirigé vers la couche fonctionnelle (12, 20), sachant que pour générer le domaine annulaire plus épais (B1) on ménage un orifice de passage provisoire concentrique par rapport à l'orifice de passage de fluides à générer dans la deuxième tôle en acier utilisée pour la deuxième couche d'étanchéité (24), orifice de passage provisoire dont le diamètre est plus petit que celui de l'orifice de passage de fluides, à la suite de quoi on estampe une protubérance (114) entourant tel un anneau l'orifice de passage provisoire dans la deuxième tôle en acier, de telle manière que le bord extérieur de l'orifice de passage provisoire est tiré radialement vers l'extérieur, à la suite de quoi on donne, par estampage, au domaine, doté de la protubérance (114), de la deuxième tôle en acier la forme du domaine annulaire (B1) plus épais, **caractérisé en ce que** l'on forme une rainure annulaire (18, 22) dans le domaine annulaire plus épais de telle sorte que lorsque le joint plat d'étanchéité est compressé, la moulure d'étanchéité (18, 22) entre en prise, avec sa crête, dans la rainure annulaire (30, 32).

13. Procédé selon la revendication 11 ou la revendication 12, dans lequel la rainure annulaire (30, 32) est estampée dans le domaine annulaire plus épais (B1).

14. Procédé selon la revendication 11 et/ou la revendication 12, dans lequel on génère, dans la deuxième tôle en acier, deux domaines annulaires plus épais (B2, B3), qui sont à une distance radiale l'un de l'autre relativement à l'orifice de passage de fluides et entre lesquels se trouve la rainure annulaire (30, 32).

15. Procédé selon la revendication 14, dans lequel on génère le domaine annulaire plus épais (B2) radialement intérieur par rapport à l'orifice de passage de fluides selon la revendication 11 et le domaine annulaire plus épais (B3) radialement extérieur selon la revendication 12.

16. Procédé selon la revendication 14, **caractérisé en ce que** les deux domaines annulaires plus épais (B2, B3) sont généré conformément à la revendication 12.
